**Europäisches Patentamt**

(19) **European Patent Office**

**Office européen des brevets**

(11) Numéro de publication: **0 044 251**
**B1**

(12) **FASCICULE DE BREVET EUROPEEN**

(45) Date de publication du fascicule du brevet:
02.01.85

(21) Numéro de dépôt: **81401103.7**

(22) Date de dépôt: **08.07.81**

(51) Int. Cl.³: **B 64 C 1/32**

(54) **Dispositif pyrotechnique de découpage et d'éjection d'un élément transparent de verrière d'avion.**

(30) Priorité: **11.07.80 FR 8015489**

(43) Date de publication de la demande:
**20.01.82 Bulletin 82/3**

(45) Mention de la délivrance du brevet:
**02.01.85 Bulletin 85/1**

(84) Etats contractants désignés:
**DE GB IT SE**

(56) Documents cités:
**FR - A - 2 077 846**
**FR - A - 2 121 843**
**US - A - 3 486 410**
**US - A - 3 919 939**

(73) Titulaire: **SOCIETE NATIONALE INDUSTRIELLE AEROSPATIALE, 37 boulevard de Montmorency, F-75016 Paris Cedex 16 (FR)**

(72) Inventeur: **Chigot, Claude, 1, rue des Hêtres, F-44600 Saint Nazaire (FR)**
Inventeur: **Morlan, Serge, 80, Avenue Fernand Lefebvre, F-78300 Poissy (FR)**

(74) Mandataire: **Mongrédien, André et al, c/o BREVATOME 25, rue de Ponthieu, F-75008 Paris (FR)**

## Description

La présente invention concerne un dispositif pyrotechnique permettant à la fois le découpage et l'éjection d'un élément transparent de verrière d'avion de façon à faciliter l'évacuation d'urgence de l'équipage.

Pour pratiquer une ouverture dans l'habitacle d'un avion, en cas de détresse, on utilise de plus en plus des dispositifs pyrotechniques.

En effet, l'on considère que des dispositifs présentent de nombreux avantages par rapport aux dispositifs classiques (mécaniques, pneumatiques, électriques, etc. . . ). En particulier, ils offrent la possibilité de découper tout type de matériaux et ils présentent une rapidité de fonctionnement (quelques millisecondes), une puissance élevée (plusieurs centaines de kilobars), une haute fiabilité et un bilan de masse inférieur au bilan de masse de tout autre système.

L'objectif à atteindre est d'obtenir le plus rapidement possible l'évacuation d'un membre de l'équipage grâce à son siège éjectable dont la trajectoire doit être libérée de tout obstacle et en particulier de la verrière de l'habitacle. Pour assurer une telle fonction, il est désormais classique d'utiliser des cordeaux détonants pour fragiliser ou découper la verrière, mais l'évacuation des morceaux découpés reste un problème majeur en vue de garantir la sécurité du pilote par exemple et de protéger son équipement.

De plus, certaines configurations de verrière »avant« sont soumises à des efforts aérodynamiques importants, qui risquent, à grande vitesse, de faire pénétrer les morceaux découpés à l'intérieur de l'habitacle et de blesser par conséquent les occupants et d'endommager leurs équipements.

Plusieurs solutions ont été successivement étudiées et installées sur un avion pour remédier à ces dangers. L'une d'entre elles consiste en un largage mécanique en vol de la verrière qui libère le passage du siège de tout obstacle, ce largage pouvant être amélioré par l'utilisation de vérins pyrotechniques facilitant l'entrebaillement de la verrière dans le lit du vent. Mais il est nécessaire de »temporiser« l'éjection du siège pour minimiser les risques de rencontre de ce dernier, donc de son occupant, avec la verrière, d'où une perte de temps trop importante en cas d'éjection à basse altitude ou dans des conditions particulières de vol.

Pour pallier cette perte de temps, différentes solutions ont été proposées, comme par exemple, l'utilisation d'un système de déverrouillage par vérins pyrotechniques et largage de verrières au moyen de systèmes à fusées. Mais ce système est très sophistiqué donc d'un coût très élevé. On a aussi proposé des systèmes dits de fragilisation de verrière. Ceux-ci consistent à préfragmenter, par de multiples fissures provoquées par un dispositif pyrotechnique commandé par le départ du siège pilote, l'élément transparent de la verrière. L'éjection du pilote se fait alors par le passage au travers de cet élément, ainsi fragilisé, et celui-là va se trouver un court instant en présence de multiples morceaux de verrière qui peuvent présenter des dangers pour lui-même et/ou pour son équipement. Un tel système de fragilisation de verrière est décrit dans le brevet français 2 140 605 déposé le 9 juin 1972 par la Société HAWKER SIDDELEY AVIATION LIMITED et intitulé »Système d'évacuation d'équipage d'avion«.

Il a aussi été proposé dans un document FR-A-2 121 843 un dispositif pyrotechnique intégré à la structure de la verrière d'un avion assurant le découpage et l'éjection de l'élément transparent de ladite verrière, au moyen d'un cordeau détonant, dispose à la péripherie de la verrière de façon à faciliter l'éjection de l'équipage hors de l'habitacle muni de sièges éjectables, ladite verrière étant maintenue dans la structure de l'habitacle par deux bordures longitudinales comportant un profilé d'accrochage de l'élément transparent sur ladite verrière et deux arceaux comportant un talon d'accrochage dudit élément.

Pour remedier aux différents inconvénients des systèmes antérieurs, la présente invention concerne un dispositif pyrotechnique du dernier type caractérisé en ce que le cordeau détonant est logé, d'une part dans une première gorge ménagée dans les bordures longitudinales, contre le profilé d'accrochage et en-dessous de la face inférieure du bord de l'élément transparent, et d'autre part dans une deuxième gorge ménagée dans les arceaux avant et arrière, en regard et contre le talon d'accrochage.

Le dispositif pyrotechnique permet le découpage et l'éjection de l'élément transparent de la verrière d'un avion, cet élément transparent étant décollé et éjecté de l'avion, suivant les bordures longitudinales, à l'aide de l'énergie fournie par la détonation du cordeau pyrotechnique, disposé sous les bords de l'élément transparent, de façon à découper le profilé d'accrochage dudit élément sur les bordures longitudinales de la verrière et à créer une forte pression à sa base lui donnant une impulsion maximale dirigée verticalement des bas en haut, et suivant les arceaux avant et arrière, à l'aide de l'énergie fournie par la détonation du cordeau pyrotechnique, disposé contre le talon d'accrochage de l'élément transparent, de manière telle qu'au niveau de l'arceau avant elle provoque un découpage franc du talon et de l'élément transparent en induisant une impulsion complémentaire de l'intérieur vers l'extérieur de l'habitacle, et qu'au niveau de l'arceau arrière, elle provoque le découpage du talon et de l'élément transparent en induisant une impulsion complémentaire limitée entraînant une retenue temporaire de l'élément transparent sur le talon, l'action conjuguée de ces décollage, de ces découpages et de ces impulsions amenant de façon concomitante le basculement de l'élément transparent vers l'arrière de l'avion et son éjection à très grande vitesse libérant la trajectoire des sièges éjectables de tout obstacle.

Selon un mode préféré du procédé selon l'invention, le découpage de l'élément transparent de la verrière est réalisé en faisant subsister à la périphérie dudit élément une partie du profilé d'accrochage lui assurant une meilleure tenue mécanique et évitant sa fragmentation.

L'invention est illustrée par les figures suivantes:

— la figure 1 représente schématiquement une verrière d'avion munie du dispositif selon l'invention;

— la figure 2 représente un agrandissement de la figure 1 au niveau de la section II;

— la figure 3 représente un agrandissement de la figure 1 au niveau de la section III;

— la figure 4 représente un agrandissement de la figure 1 au niveau de la section IV.

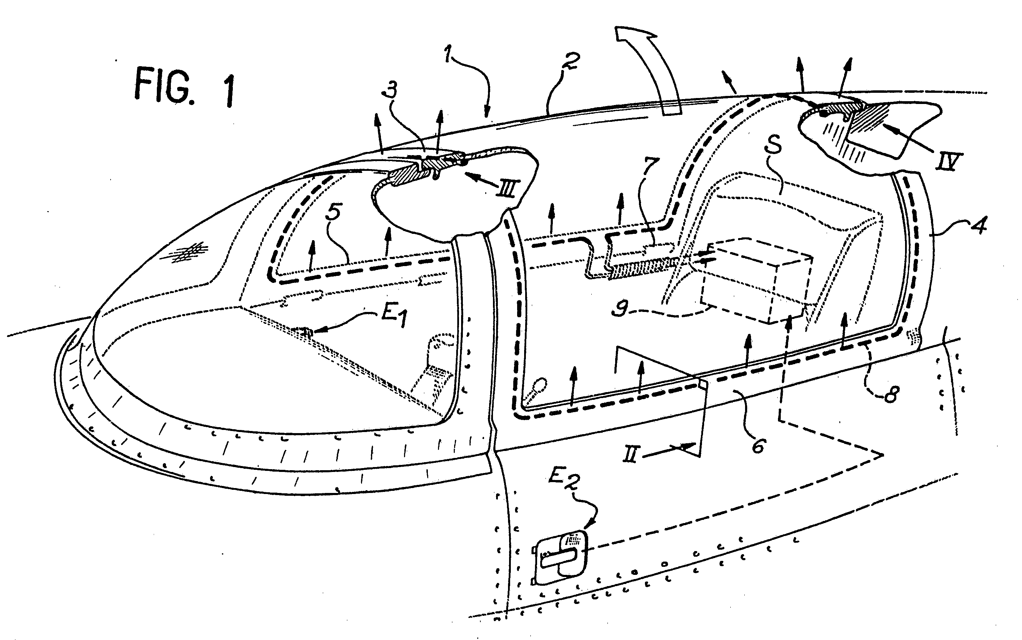

Sur le figure 1 est représentée une verrière 1 d'un avion, comportant un élément transparent 2 maintenu dans un arceau avant 3, un arceau arrière 4 et deux bordures longitudinales 5 et 6, permettant également le maintien de l'élément transparent sur la verrière. Dans l'exemple présenté, celle-ci est articulée latéralement sur des charnières telles que 7 et son ouverture se fait par un basculement latéral. Elle pourrait être articulée différemment et basculer de l'avant vers l'arrière. Le dispositif selon l'invention pourrait s'appliquer également à une verrière à coulisses. Une telle verrière permet l'accès à l'habitacle de l'avion et son évacuation normale au sol. Un cordeau détonant 8, placé à la périphérie de la verrière est logé dans les bordures longitudinales 5 et 6 et dans les arceaux 3 et 4; son positionnement sera décrit plus en détail ultérieurement. Il est relié aux moyens de mise en détonation, non représentés, par une chaîne de transmission telle que 9.

Ce dispositif pyrotechnique assure le découpage et l'éjection de l'élément transparent 2 de façon à faciliter l'évacuation d'urgence de l'équipage hors de l'habitacle de l'avion. La mise en détonation du cordeau pyrotechnique 8 est en général commandée par le mouvement de siège 5 ou tout début de sa phase d'éjection par tout moyen connu.

En cas de nécessité d'évacuation d'urgence au sol, par exemple en cas de crash, et alors que la verrière peut être bloquée par d'éventuelles déformations, la mise en détonation du cordeau pyrotechnique 8 peut être accomplie, indépendamment du siège éjectable S, par une commande manuelle. Celli-ci peut comprendre une poignée de déclenchement intérieure $E_1$ et au moins une poignée de déclenchement extérieure $E_2$, permettant le découpage de l'élément transparent et son éjection, sans intervention du siège éjectable, et pouvant être actionnées soit par un membre de l'équipage, soit par tout intervenant extérieur.

Les différentes flèches représentées sur cette figure montrent, lors de la mise en action du dispositif pyrotechnique, la direction prise par les différentes impulsions produites par la détonation du cordeau 8.

Sur la figure 2, est représentée une section suivant II de la bordure longitudinale 5 de la figure 1, la bordure 6 étant identique à cette dernière. Cette bordure longitudinale 5 comprend un logement 10 destiné à recevoir le bord de l'élément transparent 2 par l'intermédiaire d'un profilé d'accrochage à jonc 11 de type connu, réalisé en matériau composite. Ce profilé 11 comporte deux parois verticales telles que 12 auxquelles adhère l'élément transparent par collage, parois qui se rejoignent en 13 en enfermant le jonc 14. Les parois inclinées telles que 15 qui sont le prolongement des parois 12 du profilé d'accrochage délimitent avec la face inférieure 2' du bord de l'élément transparent 2 un espace garni d'un matériau de remplissage du type cellulaire ou autre. Le cordeau détonant 8 est disposé dans une gorge 16 pratiquée dans une face de la cavité formant le logement 10, appartenant à la partie interne de la bordure longitudinale 5. L'ouverture 16' de ladite gorge est située en regard de la paroi inclinée 15 et tournée vers l'intérieur de l'habitacle tandis que dans la même zone, contenant le cordeau, et afin de la renforcer, la bordure longitudinale 5 offre un renflement tel que 17. Un tel agencement du cordeau 8 a pour premier effet, lors de sa détonation, de découper le profilé 11 à l'endroit des parois 15 tandis que le second effet, dû à la haute pression instantanée des gaz, induit une impulsion maximale verticale diregée de bas en haut suivant la flèche $F_1$ qui décolle les parois du profilé 11 de leur logement 10 et assure l'éjection de l'élément transparent au-dessus de l'habitacle.

La figure 3 représente une section suivant le plan III de l'arceau avant 3 de la figure 1. Cet arceau est constitué de deux éléments structuraux: un élément interne 18 et un élément externe ou couvrejoint 19. Ces deux éléments prennent en sandwich un talon d'accrochage 20 en matériau composite offrant un logement 20' à deux parois, une paroi interne 21 et une paroi externe 22, destiné à recevoir l'élément transparent 2. La paroi interne 21 dépasse l'extrémité renflée formant renfort 23 de l'élément structural interne 18 de l'arceau et s'applique sur l'élément transparent sur une largeur plus importante que la paroi externe 22 dudit logement. L'élément transparent 2 est rendu solidaire de son talon d'accrochage 20 par collage et l'assemblage de l'ensemble est réalisé par un boulonnage tel que 24. Dans la face interne de l'élément 18, au droit de sa partie de renfort 23, est pratiquée une gorge 25. Une ouverture 25' de ladite gorge est située en regard de la paroi interne 21 et sensiblement en regard de l'extrémité de la paroi externe 22. Dans cette gorge est disposé le cordeau pyrotechnique 8 dont une première longueur est installée dans la bordure longitudinale 5. Ce positionnement du cordeau 8 ajouté à la forme du talon d'accrochage 20 de l'élément transparent 2 est tel que la détonation dutit cordeau a pour effet un découpage franc dudit élément et une impulsion importante dirigée de l'intérieur vers l'extérieur de l'habitacle comme l'indique la flèche F$_2$. Le cordeau détonant 8 logé comme nous l'avons vu dans la bordure longitudinale 5, puis dans l'arceau avant 3, est ensuite disposé dans la bordure 6 de la même façon que dans la bordure 5. La mise en place de la suite du cordeau 8 dans l'arceau arrière 4, dont une section suivant IV de la figure 1 est représentée à la figure 4, s'effectue de la façon indiquée ci-après.

L'arceau arrière 4 est composé de deux éléments structuraux, à savoir un élément interne 26 et un élément externe ou couvre-joint 27. Ces deux éléments prennent en sandwich un talon d'accrochage 28 en matériau composite offrant un logement 28' à deux parois, une parois interne 29 et une paroi externe 30, destiné à recevoir l'élément transparent 2. La paroi interne 29 recouvre ce dernier sur une largeur moindre que la largeur de la paroi externe 30. L'élément transparent 2 est rendu solidaire de son talon d'accrochage 28 par collage et l'assemblage de l'ensemble est réalisé par un boulonnage 31. Dans la face interne de l'élément 26, dans la zone renforcée 32, est pratiquée une gorge 33. L'ouverture 33' de ladite gorge est située en regard de la paroi 29 et en regard également de la paroi externe 30. Dans la gorge 33 est disposé le cordeau détonant 8. Le positionnement de ce dernier et la forme du talon d'accrochage 28 sont tels que la détonation du cordeau provoque une rupture partielle de l'élément transparent 2 suivie d'un délaminage de son bord concourant à un effet de retenue temporaire sur l'impulsion dirigée de l'intérieur vers l'extérieur de l'habitacle comme l'indique la flèche F$_3$.

Les effets composés de la détonation du cordeau pyrotechnique 8 sur la périphérie de la verrière, c'est-à-dire découpage et décollage de l'élément transparent de verrière et impulsions dirigées de bas en haut et de l'intérieur vers l'extérieur de l'habitacle avec retenue sur l'arceau arrière, entraînent de façon concomitante un mouvement de basculement vers l'arrière de l'avion de l'élément transparent ainsi découpé, et son éjection à très grande vitesse libérant de ce fait la trajectoire du siège éjectable de tout obstacle.

Le dispositif pyrotechnique et le procédé d'éjection de l'élément transparent de la verrière peuvent être adaptés à tout type de verrière d'avion mono ou multiplaces. Dans le cas, par exemple, où la verrière est composée de deux éléments transparents avant et arrière, ceux-ci sont séparés par un arceau central unique dont la technologie sera celle qui est représentée sur la figure 3 pour la partie arrière de l'arceau et celle qui est représentée sur la figure 4 pour la partie avant. Dans un autre exemple de verrière composée de deux éléments transparents gauche et droit, ceux-ci sont séparés par un montant central longitudinal dont la technologie sera identique à celle qui est représentée sur la figure 2. Dans ces exemples de verrière comportant au moins deux éléments transparents, les chaînes pyrotechniques de découpage pourront être séparées et leur mise en détonation pourra être soit séparée, soit simultanée.

## Revendications

1. Dispositif pyrotechnique assurant le découpage et l'éjection d'un élément transparent (2) de verrière d'avion (1), au moyen d'un cordeau détonant (8), disposé à la périphérie de la verrière, de façon à faciliter l'éjection de l'équipage hors de l'habitacle de l'avion muni de sièges éjectables (S), ladite verrière étant maintenue dans la structure de l'habitacle par deux bordures longitudinales (5, 6) comportant un profilé d'accrochage (11) de l'élément transparent sur la verrière, et deux arceaux (3, 4) comportant un talon d'accrochage (20, 28) de l'élément transparent, caractérisé en ce que le cordeau détonant (8) est logé, d'une part dans une première gorge (16) ménagée dans les bordures longitudinales (5, 6), contre le profilé d'accrochage (11) et endessous de la face inférieure (2') du bord de l'élément transparent (2), et d'autre part, dans une deuxième gorge (25, 33) ménagée dans les arceaux avant (3) et arrière (4), en regard et contre le talon d'accrochage (20, 28).

2. Dispositif selon la revendication 1, caractérisé en ce que la première gorge (16), dans laquelle est disposé le cordeau détonant (8) est creusée dans la face d'une cavité formant un logement (10) destiné à recevoir l'élément transparent (2) et appartenant à la partie interne des bordures longitudinales par rapport à l'habitacle.

3. Dispositif selon la revendication 2, caractérisé en ce que la première gorge (16), dans laquelle est disposé le cordeau détonant, offre une ouverture (16') tournée vers l'intérieur de l'habitacle et en regard d'une paroi inclinée (15) du profilé d'accrochage (11) de l'élément transparent sur la verrière.

4. Dispositif selon la revendication 1, caractérisé en ce que la deuxième gorge (25, 33) dans laquelle est disposé le cordeau détonant (8), est creusée dans la face interne d'un élément structural interne (18, 26) par rapport à l'habitacle des arceaux avant (3) et arrière (4) qui avec un élément stuctural externe (19, 27) prend en sandwich le talon d'accrochage (20, 28), offrant un logement (20', 28') à deux parois interne (21, 29) et externe (22, 30), destiné à recevoir l'élément transparent (2).

5. Dispositif selon la revendication 4, caractérisé en ce que l'ouverture (25', 33') de la deuxième gorge, dans laquelle est disposé le cordeau détonant (8), est tournée contre la paroi interne (21, 29) du logement (20', 28') pour l'élément transparent (2) auquel il adhère par collage.

6. Dispositif selon les revendications 4 et 5, caractérisé en ce que, dans l'arceau avant (3), la paroi interne (21) du logement (20') pour l'élément transparent, contre laquelle est appliqué le cordeau détonant (8) offre une plus grande largeur de recouvrement dudit élément que la largeur de la paroi externe (22) dudit logement dont l'extrémité est située en regard dudit cordeau.

7. Dispositif selon les revendications 4 et 5, caractérisé en ce que, dans l'arrière (4), la paroi interne (29) du logement (28') pour l'élément transparent, contre laquelle est appliqué le cordeau détonant, offre une largeur de recouvrement dudit élément moindre que la largeur de la paroi externe (30).

8. Dispositif selon l'une quelconque des revendications 1 à 7, caractérisé en ce que les éléments structuraux internes (18, 26) des arceaux avant et arrière et la partie interne des bordures longitudinales (5, 6) offrent une zone de renforcement (17, 23, 32) au droit duquel se situe le cordeau détonant (8).

9. Dispositif selon l'une quelconque des revendications 1 à 8, caractérisé en ce que la détonation du cordeau pyrotechnique (8) est commandée par l'éjection de l'un des sièges (S) de l'équipage.

10. Dispositif selon l'une quelconque des revendications 1 à 8, caractérisé en ce que la détonation du cordeau pyrotechnique (8) est commandée au moyen d'une poignée (E₁) située à l'intérieur de l'habitacle.

11. Dispositif selon l'une quelconque des revendications 1 à 8, caractérisé en ce que la détonation du cordeau pyrotechnique (8) est commandée au moyen d'une poignée (E₂) située à l'extérieur de l'habitacle.

12. Dispositif selon l'une quelconque des revendications 1 à 11, caractérisé en ce que le découpage de l'élément transparent (2) de la verrière est réalisé en faisant subsister à sa périphérie une partie du profilé d'accrochage (11) dudit élément sur ladite verrière.

**Patentansprüche**

1. Pyrotechnische Vorrichtung zum Absprengen und Abwerfen eines durchsichtigen Elements (2) eines Flugzeugkabinendachs (1) mittels einer entlang dem Umfang des Dachs angeordneten Sprengschnur (8) zum Erleichtern des Herausschleuderns der Besatzung aus der mit Schleudersitzen ausgestatteten Flugzeugkabine, bei welcher das Dach durch zwei Längsträger (5, 6), welche jeweils ein Halteprofil (11) für die Befestigung des durchsichtigen Elements auf der Kabine aufweisen, und durch zwei Bogenträger (3, 4), welche jeweils einen Haltewulst (20, 28) für das durchsichtige Element aufweisen, in der Kabinenkonstruktion befestigt ist, dadurch gekennzeichnet, daß die Sprengschnur (8) einmal in einer im Bereich des Halteprofils (11) des jeweiligen Längsträgers (5, 6) unterhalb der unteren Endfläche (2') des Rands des durchsichtigen Elements (2) geformten ersten Nut (16) und zum anderen in einer im Bereich des Haltewulsts (20, 28) im vorderen und im hinteren Bogenträger (3 bzw. 4) geformten zweiten Nut (25, 33) untergebracht ist.

2. Vorrichtung nach Anspruch 1, dadurch gekennzeichnet, daß die erste Nut (16), in welche die Sprengschnur (8) eingelegt ist, im Boden einer Ausnehmung gebildet ist, welche einen Sitz (10) für die Aufnahme des durchsichtigen Elements (2) darstellt und zum in bezug auf die Kabine inneren Bereich des jeweiligen Längsträgers gehört.

3. Vorrichtung nach Anspruch 2, dadurch gekennzeichnet, daß die erste Nut (16), in welcher die Sprengschnur untergebracht ist, im Bereich einer geneigten Wandung (15) des Halteprofils (11) für die Befestigung des durchsichtigen Elements auf der Kabine eine zum Innenraum der Kabine führende Öffnung (16') aufweist.

4. Vorrichtung nach Anspruch 1, dadurch gekennzeichnet, daß die zweite Nut (25, 33), in welcher die Sprengschnur (8) angeordnet ist, in der Innenfläche eines in bezug auf die Kabine inneren Elements (18, 26) des vorderen bzw. hinteren Bogenträgers (3 bzw. 4) geformt ist und daß der Haltewulst (20, 28) zwischen dem inneren und einem äußeren Element (19, 27) des jeweiligen Bogenträgers festgehalten ist und einen Sitz (20', 28') mit inneren und äußeren Wandungen (21, 29 bzw. 22, 30) für die Aufnahme des durchsichtigen Elements (2) aufweist.

5. Vorrichtung nach Anspruch 4, dadurch gekennzeichnet, daß die Öffnung (25', 33') der zweiten Nut, in welcher die Sprengschnur (8) angeordnet ist, der Innenwand (21, 29) des Sitzes (20', 28') für das durchsichtige Element (2), an welchem dieses durch Kleben befestigt ist, zugewandt ist.

6. Vorrichtung nach Ansprüchen 4 und 5, dadurch gekennzeichnet, daß die Innenwand (21) des Sitzes (20') für das durchsichtige Element, gegenüber welcher die Sprengschnur (8) angeordnet ist, am vorderen Bogenträger (3) eine größere das durchsichtige Element überdeckende Breite aufweist als die äußere Wand (22) des betreffenden Sitzes, deren freier Rand gegenüber der Sprengschnur angeordnet ist.

7. Vorrichtung nach Ansprüchen 4 und 5, dadurch gekennzeichnet, daß die innere Wand (29) des Sitzes (28') für das durchsichtige Element, gegenüber welcher die Sprengschnur angeordnet ist, beim hinteren Bogenträger (4) eine geringere das durchsichtige Element überdeckende Breite hat als die äußere Wand (30).

8. Vorrichtung nach einem der Ansprüche 1 bis 7, dadurch gekennzeichnet, daß die inneren Tragelemente (18, 26) des vorderen und des hinteren Bogenträgers sowie die inneren Teile der Längsträger (5, 6) jeweils einen Verstärkungsbereich (17, 23, 32) aufweisen, in dessen Bereich die Sprengschnur (8) angeordnet ist.

9. Vorrichtung nach einem der Ansprüche 1 bis 8, dadurch gekennzeichnet, daß die Zündung der Sprengschnur (8) durch das Herausschleudern eines der Sitze (S) der Besatzung ausgelöst wird.

10. Vorrichtung nach einem der Ansprüche 1 bis 8, dadurch gekennzeichnet, daß die Zündung der Sprengschnur (8) durch einen im Inneren der Kabine angeordneten Handgriff (E₁) ausgelöst wird.

11. Vorrichtung nach einem der Ansprüche 1 bis 8, dadurch gekennzeichnet, daß die Zündung der Sprengschnur (8) mittels eines außerhalb der Kabine angeordneten Handgriffs (E₂) betätigbar ist.

12. Vorrichtung nach einem der Ansprüche 1 bis 11, dadurch gekennzeichnet, daß beim Absprengen des durchsichtigen Elements (2) des Kabinendachs jeweils ein Teil des Halteprofils (11) am Rand des durchsichtigen Elements bzw. des Kabinendachs verbleibt.

## Claims

1. Pyrotechnic device for separation and ejection of a transparent element (2) of an aircraft cockpit canopy (1), be means of a detonating cord (8) disposed at the edge of the canopy, whereby to facilitate ejection of the crew from an aircraft cockpit provided with ejection seats (S), said canopy being held to the cockpit structure by two longitudinal edge-members (5, 6) comprising an engagement profile (11) for the transparent element of the canopy, and two arches (3, 4) comprising an engagement bead (20, 28) for the transparent element, characterized in that one part of the detonating cord is located in a first groove (16) formed in the longitudinal edge-members (5, 6), against the engagement profile (11) and below the lower surface of the rim (2') of the transparent element, and the other part is located in a second groove (25, 33) formed in the forward (3) and rear (4) arches, facing and against the engagement bead.

2. Device according to Claim 1, characterized in that the first groove (16) in which the detonating cord (8) is located, is formed in the surface of a cavity constituting a seating (10) for the transparent element (2), and belonging to the inner portion of the longitudinal edge with respect to the cockpit.

3. Device according to Claim 2, characterized in that the first groove (16) in which the detonating cord is located, has an opening (16) on its inward side with respect to the cockpit, and facing an inclined edge (15) of the engagement profile (11) for the transparent element of the canopy.

4. Device according to Claim 1, characterized in that the second groove (25, 33) in which the detonating cord (8) is located, is formed on the inner surface of an internal structural member (18, 26) of the forward (3) and rear (4) arches with respect to the cockpit, which together with an external structural member (19, 27) sandwiches the engagement bead (20, 28), forming a seating (20', 28') with two walls, respectively inner (21, 29) and outer (22, 30), adapted to receive the transparent element (2).

5. Device according to Claim 4, characterized in that the opening (25', 33') of the second groove, in which the detonating cord (8) is located, is directed towards the inner wall (21, 29) of the seating (20', 28') for the transparent element (2) adhering thereto.

6. Device according to Claims 4 and 5, characterized in that the inner wall (21) of the lodgement (20') for the transparent element on the forward arch (3), against which the detonating cord (8) is applied, covers a greater width of the said element than the width of the outer wall (22) of the said element whose end faces said cord.

7. Device according to Claims 4 and 5, characterized in that the inner wall (29) of the lodgement (28') for the transparent element on the rear arch (4), against which the detonating cord is applied, covers a smaller width of the said element than the width of the outer wall (30).

8. Device according to any one of Claims 1 to 7, characterized in that the internal structural members (18, 26) of the forward and rear arches and the inner part of the longitudinal edge members (5, 6) have reinforcing zones (17, 23, 32) adjacent the detonating cord (8).

9. Device according to any one of Claims 1 to 8, characterized in that the detonation of the pyrotechnic card (8) is actuated by ejection of one of the crew seats (S).

10. Device according to any one of Claims 1 to 8, characterized in that detonation of the pyrotechnic cord (8) is actuated by a handle (E₁) located inside the cabin.

11. Device according to any one of Claims 1 to 8, characterized in that detonation of the pyrotechnic cord (8) is actuated by a handle (E₂) located outside the cabin.

12. Device according to any one of Claims 1 to 11, characterized in that the cutting of the transparent element (2) of the canopy leaves, on the periphery of the canopy, a portion of the engagement profile (11) for the element.

# FIG. 1

0 044 251